# EUROPEAN PATENT APPLICATION

(11) **EP 4 699 803 A2**
(43) Date of publication of application: **25.02.2026**
(21) Application number: 25187839.3
(22) Date of filing: 07.07.2025
(51) Int. Cl.: B32B 43/00, C08J 9/32, H01M 10/54, H01M 4/66, C09J 9/02, H01M 10/0525, H01M 4/02

(54) **CURRENT COLLECTING FOIL, BIPOLAR STORAGE BATTERY, AND MATERIAL RECOVERY METHOD OF BIPOLAR STORAGE BATTERY**

(30) Priority: 21.08.2024 JP 2024139995
(71) Applicant: TOYOTA JIDOSHA KABUSHIKI KAISHA, Toyota-shi, Aichi-ken 471-8571 (JP)
(72) Inventor: KATO, Kazuhito, Toyota-shi, 471-8571 (JP); YOKOYAMA, Tomohiro, Toyota-shi, 471-8571 (JP); FUJISHIMA, Seigo, Toyota-shi, 471-8571 (JP); MIKI, Nariaki, Toyota-shi, 471-8571 (JP); MORIOKA, Satoshi, Toyota-shi, 471-8571 (JP); ABE, Takeshi, Toyota-shi, 471-8571 (JP); KATO, Masashi, Toyota-shi, 471-8571 (JP)
(74) Representative: Kuhnen & Wacker Patent- und Rechtsanwaltsbüro PartG mbB

(57) **Abstract**

A material recovery method of a bipolar storage battery includes a disassembling step of disassembling the bipolar storage battery to separate a bipolar electrode from components, a foaming step of heating the separated bipolar electrode to allow a resin foaming agent contained in an adhesive layer (4) of a current collecting foil (1) forming the bipolar electrode to foam to increase a thickness of the adhesive layer (4), and a separation step of separating a positive electrode foil (2) and a negative electrode foil (3) adhered to each other via the adhesive layer (4) in the current collecting foil (1) in a state in which the resin foaming agent foams to increase the thickness of the adhesive layer (4).

## Description

### BACKGROUND OF THE INVENTION

### 1. Field of the Invention

The present invention relates to a current collecting foil, a bipolar storage battery, and a material recovery method of the bipolar storage battery.

### 2. Description of the Related Art

As a method for recovering a material from a bipolar storage battery, Patent Document 1 discloses a method for separating a positive electrode current collector and a negative electrode current collector by mechanically removing a substrate and an adhesive by applying an external force to a bipolar electrode obtained by disassembling a battery pack using a tool.

### PRIOR ART DOCUMENT

### PATENT DOCUMENT

Patent Document 1: Japanese Laid open Patent Publication No. 2022-147473

### SUMMARY OF THE INVENTION

### PROBLEM TO BE RESOLVED BY THE INVENTION

However, in a configuration disclosed in Patent Document 1, since a substrate and an adhesive are mechanically removed using a tool, it is difficult to completely remove them, and there is room for improvement such that a post-treatment step for removing a residue is required.

The present invention has been made in view of the above circumstances, and an object thereof is to provide a current collecting foil in which a positive electrode foil and a negative electrode foil can be easily separated when a material is recovered, a bipolar storage battery, and a material recovery method of the bipolar storage battery.

### MEANS FOR SOLVING THE INVENTION

A current collecting foil according to the present invention is obtained by adhering a positive electrode foil and a negative electrode foil to each other via an adhesive layer containing a conductive material, and the adhesive layer contains a resin foaming agent.

According to this configuration, since an adhesive layer of a laminated foil contains a resin foaming agent, a positive electrode foil and a negative electrode foil can be easily separated by allowing the resin foaming agent to foam when a component of a current collecting foil is recovered.

Further, the resin foaming agent may contain at least one of a plurality of types of chemical foaming agents.

According to this configuration, the resin foaming agent of the adhesive layer can be formed of a chemical foaming agent.

Further, the resin foaming agent may contain at least one of a chemical foaming agent and a thermally expandable microcapsule.

According to this configuration, the resin foaming agent in the adhesive layer can be formed of a thermally expandable microcapsule.

Further, the resin foaming agent may be contained in the adhesive layer at a ratio of 10 to 50%.

According to this configuration, the resin foaming agent in a state before foaming is mixed at a ratio that does not interfere with electron conductivity between the positive electrode foil and the negative electrode foil.

Further, the adhesive layer may contain an olefin-based resin, an epoxy-based resin, and a metal plated resin, and the olefin-based resin may be a resin having a melting point lower than foaming start temperature of the resin foaming agent.

According to this configuration, since an olefin-based resin contained in the adhesive layer is a thermoplastic resin, this is softened when the resin foaming agent foams to form a film, so that the resin foaming agent can swell.

A bipolar storage battery according to the present invention includes: a current collecting foil obtained by adhering a positive electrode foil and a negative electrode foil to each other via an adhesive layer containing a conductive material. Further, the adhesive layer contains a resin foaming agent.

According to this configuration, since the adhesive layer of the laminated foil included in a bipolar storage battery contains the resin foaming agent, the positive electrode foil and the negative electrode foil can be easily separated by allowing the resin foaming agent to foam when the component of the bipolar storage battery is recovered.

Further, the positive electrode foil may be an aluminum foil, and the negative electrode foil may be a copper foil.

According to this configuration, an aluminum foil and a copper foil can be easily separated from each other in a state in which the resin foaming agent of the adhesive layer foams.

A material recovery method of a bipolar storage battery according to the present invention includes: a disassembling step of disassembling the bipolar storage battery to separate a bipolar electrode from components; a foaming step of heating the separated bipolar electrode to allow a resin foaming agent contained in an adhesive layer of a current collecting foil forming the bipolar electrode to foam to increase a thickness of the adhesive layer; and a separation step of separating a positive electrode foil and a negative electrode foil adhered to each other via the adhesive layer in the current collecting foil in a state in which the resin foaming agent foams to increase the thickness of the adhesive layer.

According to this configuration, the positive electrode foil and the negative electrode foil can be easily separated by allowing the resin foaming agent contained in the adhesive layer of the current collecting foil to foam.

Further, the adhesive layer may contain an olefin-based resin, an epoxy-based resin, and a metal plated resin, the olefin-based resin may be a resin having a melting point lower than foaming start temperature of the resin foaming agent, and the foaming step may include a step of heating the bipolar electrode to temperature higher than the foaming start temperature of the resin foaming agent.

According to this configuration, since the olefin-based resin contained in the adhesive layer is a thermoplastic resin, the olefin-based resin is softened at a foaming step to form a film, so that the resin foaming agent can swell.

### EFFECT OF THE INVENTION

In the present invention, a positive electrode foil and a negative electrode foil can be easily separated when a material is recovered.

### BRIEF DESCRIPTION OF THE DRAWINGS

FIG. 1 is a diagram schematically illustrating a current collecting foil in an embodiment;
FIG. 2 is a diagram for describing a state before a resin foaming agent contained in an adhesive layer foams and a state in which the resin foaming agent foams and a thickness of the adhesive layer increases;
FIG. 3 is a flowchart illustrating a material recovery method of a bipolar storage battery; and
FIG. 4 is a diagram for describing a step after the resin foaming agent of the adhesive layer foams.

### DETAILED DESCRIPTION OF THE PREFERRED EMBODIMENTS

Hereinafter, a current collecting foil, a bipolar storage battery, and a material recovery method of the bipolar storage battery according to an embodiment of the present invention will be specifically described. Note that, the present invention is not limited to the embodiment described below.

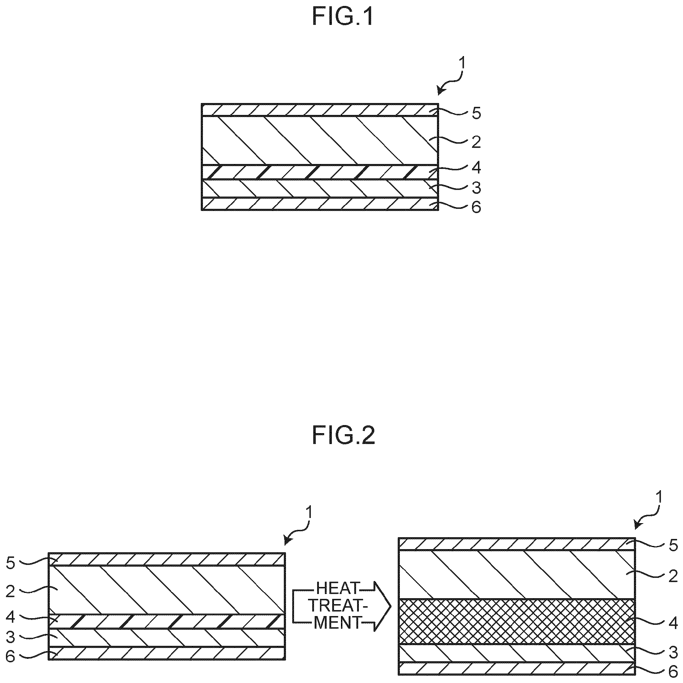

FIG. 1 is a diagram schematically illustrating a current collecting foil in the embodiment. A current collecting foil 1 includes an aluminum foil 2, a copper foil 3, an adhesive layer 4, and carbon coat layers 5 and 6.

The current collecting foil 1 is a laminated foil obtained by adhering the aluminum foil 2, which is a positive electrode foil, and the copper foil 3, which is a negative electrode foil, to each other via the adhesive layer 4. One surface of the aluminum foil 2 and one surface of the copper foil 3 are covered with the carbon coat layers 5 and 6, respectively. The current collecting foil 1, which is the laminated foil, forms a bipolar electrode. The bipolar electrode including the current collecting foil 1 is a member that forms a bipolar storage battery. The bipolar storage battery includes a plurality of bipolar electrodes including the current collecting foil 1. The bipolar storage battery including the current collecting foil 1 is a bipolar lithium-ion battery. The bipolar lithium-ion battery including the current collecting foil 1 is mounted on an electric vehicle. The electric vehicle is a battery electric vehicle (BEV) or a plug-in hybrid electric vehicle (PHEV).

The aluminum foil 2 is a positive electrode base material. A positive electrode mixture is provided on one surface of the aluminum foil 2 via the carbon coat layer 5.

The copper foil 3 is a negative electrode base material. A negative electrode mixture is provided on one surface of the copper foil 3 via the carbon coat layer 6.

The adhesive layer 4 is a resin layer that adheres the aluminum foil 2 and the copper foil 3. The adhesive layer 4 contains a resin foaming agent in addition to an olefin-based resin, an epoxy-based resin, and a metal plated resin for ensuring conduction. Among the olefin-based resin, the epoxy-based resin, the metal plated resin, and the resin foaming agent that form the adhesive layer 4, a resin having a melting point lower than foaming start temperature of the resin foaming agent is selected as the olefin-based resin. As a result, fluidity of the adhesive layer 4 increases, and foaming is promoted.

As the resin foaming agent of the adhesive layer 4, one or a mixture of a plurality of types of chemical foaming agents is used, and one that can foam in a target temperature range is selected.

Examples of the chemical foaming agent include azodicarbonamide (ADCA), dinitrosopentamethylenetetramine (DPT), p,p'-oxybisbenzenesulfonylhydrazide (OBSH), and sodium hydrogen carbonate (sodium bicarbonate).

The resin foaming agent of the adhesive layer 4 may use a thermally expandable microcapsule instead of the chemical foaming agent, or may contain both the chemical foaming agent and the thermally expandable microcapsule. The resin foaming agent may be formed only of the chemical foaming agent, may be formed only of the thermally expandable microcapsule, or may contain both the chemical foaming agent and the thermally expandable microcapsule.
In a case where the resin foaming agent contains the chemical foaming agent, the resin foaming agent of the adhesive layer 4 contains at least one of a plurality of types of chemical foaming agents (ADCA, DPT, OBSH, sodium bicarbonate).

Furthermore, the resin foaming agent of the adhesive layer 4 is contained in the adhesive layer 4 at a ratio of 10 to 50%. In the adhesive layer 4, the resin foaming agent in a state before foaming is mixed at a ratio that does not interfere with electron conductivity between the aluminum foil 2 and the copper foil 3. The ratio at which the electron conductivity between the aluminum foil 2 and the copper foil 3 is not interfered means that the ratio at which the resin foaming agent is mixed in the adhesive layer 4 is 10 to 50%.

The resin foaming agent has two functions of increasing a thickness of the adhesive layer 4 during foaming and decreasing density of the adhesive layer 4 during foaming. By using this function, physical peeling by a scraper or the like and peeling by carbonization and gasification of a resin portion by roasting and combustion are performed when a material is recovered.

As illustrated in FIG. 2, under an environment where the current collecting foil 1 is unconstrained, the thickness of the adhesive layer 4 in a state before the resin foaming agent foams is thin, and the thickness of the adhesive layer 4 in a state after the resin foaming agent foams is thick. When the current collecting foil 1 is heated at relatively low temperature during recycling, the resin foaming agent of the adhesive layer 4 foams, and a gap can be formed between the aluminum foil 2 and the copper foil 3. As a result, the resin foaming agent of the adhesive layer 4 foams by heating the current collecting foil 1 to predetermined temperature or higher under no constraint during recycling, and the aluminum foil 2 and the copper foil 3 can be easily separated from the laminated foil. That is, in a state in which the resin foaming agent of the adhesive layer 4 foams to form a large gap between the aluminum foil 2 and the copper foil 3, mechanical peeling and gas diffusion during roasting are facilitated.

In the bipolar storage battery including the current collecting foil 1 formed as described above, in a constrained state of the battery pack (state in which a high pressure is applied between the electrodes), even when the resin foaming agent in the adhesive layer 4 foams, a volume of the adhesive layer 4 does not increase, and a sufficient peeling effect cannot be obtained. Therefore, in order to maximize an effect of foaming of the resin foaming agent, it is desirable that the current collecting foil 1 is heated to allow the resin foaming agent of the adhesive layer 4 to foam in a state in which the battery module is disassembled and decomposed into the bipolar electrode.

Since the olefin-based resin contained in the adhesive layer 4 is a thermoplastic resin, this is softened when the resin foaming agent foams to form a film, so that the resin foaming agent can swell. As a result, when the resin foaming agent foams, a sufficient gap is formed between the aluminum foil 2 and the copper foil 3, so that even in a case of mechanical peeling by a scraper or the like or the treatment by high-temperature roasting (600°C or lower), treatment can be performed in a shorter time at a lower cost than before.

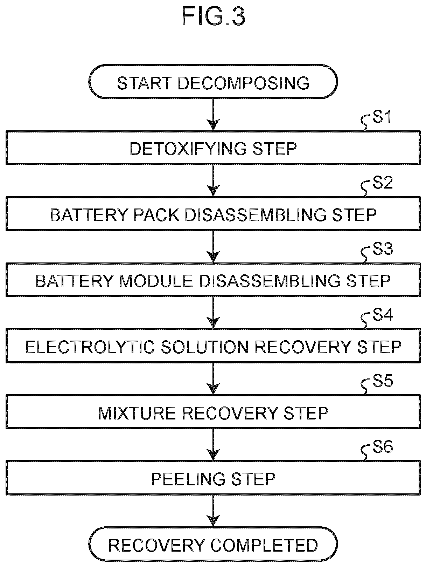

FIG. 3 is a flowchart illustrating the material recovery method of the bipolar storage battery. The material recovery method of the bipolar storage battery includes a detoxifying step (step S1), a battery pack disassembling step (step S2), a battery module disassembling step (step S3), an electrolytic solution recovery step (step S4), a mixture recovery step (step S5), and a laminated foil peeling step (step S6).

The detoxifying step is a step of discharging the battery pack for easy handling (step S1). The detoxifying step includes a discharge step. The battery pack is the bipolar lithium-ion battery including the bipolar electrode including the current collecting foil 1.

The battery pack disassembling step is a step of disassembling the battery pack and separating the battery module from components of the battery pack (step S2). The battery pack includes a plurality of battery modules, and the battery module includes the bipolar electrode.

The battery module disassembling step is a step of disassembling the battery module and removing the resin on four sides of the battery module so that it is possible to separate for each bipolar electrode (step S3). At this disassembling step, the resin on the four sides such as a sealing material is removed from the battery module formed into a quadrangular shape.

The electrolytic solution recovery step is a step of recovering an electrolytic solution filling a space between the bipolar electrodes by heating and drying under reduced pressure or the like before the heat treatment of the bipolar electrodes (step S4).

The mixture recovery step is a step of removing the positive electrode mixture and the negative electrode mixture applied to the bipolar electrode from the current collecting foil 1 to recover (step S5). The positive electrode mixture is applied to the surface of the carbon coat layer 5 on the positive electrode side. The negative electrode mixture is applied to the surface of the carbon coat layer 6 on the negative electrode side.

The laminated foil peeling step is a step of heat-treating the current collecting foil 1 to increase the film thickness of the adhesive layer 4 and to decrease the density of the adhesive layer 4, thereby separating the aluminum foil 2 and the copper foil 3 (step S6). The peeling step includes a foaming step and a separation step. The foaming step is a step of heating the bipolar electrode to allow the resin foaming agent contained in the adhesive layer 4 of the current collecting foil 1 forming the bipolar electrode to foam, thereby increasing the thickness of the adhesive layer 4. The separation step is a step of separating the aluminum foil 2 and the copper foil 3 adhered to each other via the adhesive layer 4 in the current collecting foil 1 in a state in which the resin foaming agent foams to increase the thickness of the adhesive layer 4.

The foaming step includes a step (heat treatment) of heating the current collecting foil 1 so that the resin foaming agent of the adhesive layer 4 reaches temperature higher than the foaming start temperature. The heat treatment of the current collecting foil 1 may be any of atmospheric heat treatment, contact heating, and induction heating.

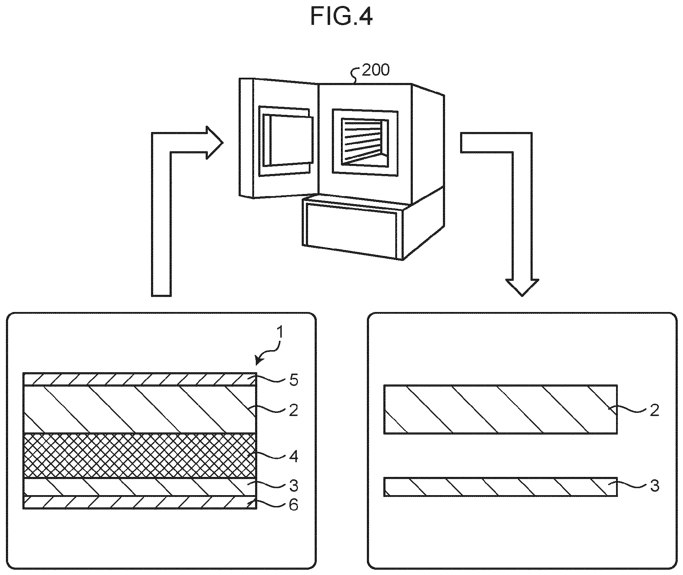

At the separation step, the laminated foil is separated into the aluminum foil 2 and the copper foil 3. Examples of a method of separating the electrode foil include a method of physically peeling with a tool and a method of separating the aluminum foil 2 and the copper foil 3 by roasting. As illustrated in FIG. 4, at the separation step, the current collecting foil 1 in a state in which the adhesive layer 4 foams is roasted at 600°C or lower using a furnace 200, and after the heat treatment, the aluminum foil 2 and the copper foil 3 are separated from each other by hand. Roasting is performed at 350 to 600°C in the furnace 200, and a roasting time is within a few minutes.

When the positive electrode mixture, the negative electrode mixture, the aluminum foil 2, and the copper foil 3 are recovered in this manner, recovery of both electrode mixtures of the bipolar electrode and the base material is completed.

As described above, according to the embodiment, when the resin foaming agent of the adhesive layer 4 foams, a sufficient gap is formed between the aluminum foil 2 and the copper foil 3, so that even in a case of mechanical peeling by a scraper or the like or the treatment by high-temperature roasting, recovery treatment can be performed in a shorter time at a lower cost than before.

Note that, in the material recovery method of the bipolar storage battery, either the mixture recovery step (step S5) or the laminated foil peeling step (step S6) may be performed earlier. The recovery method is possible in which the peeling step is performed after the electrolytic solution recovery step, and then the mixture recovery step is performed.

In the current collecting foil 1, a combination of the metal foils forming the positive electrode foil and the negative electrode foil is not limited to the aluminum foil 2 and the copper foil 3. The metal foil included in the current collecting foil 1 may be a lead foil. That is, the bipolar storage battery including the current collecting foil 1 is not limited to the bipolar lithium-ion battery, and may be a bipolar lead storage battery or a bipolar nickel hydrogen battery.

The carbon coat layers 5 and 6 are not necessarily provided. For example, a positive electrode mixture layer is formed by applying positive electrode slurry to the surface of the aluminum foil 2. Similarly, a negative electrode mixture layer is formed by applying negative electrode slurry to the surface of the copper foil 3.

### Explanation of signs

1: CURRENT COLLECTING FOIL
2: ALUMINUM FOIL (POSITIVE ELECTRODE FOIL)
3: COPPER FOIL (NEGATIVE ELECTRODE FOIL)
4: ADHESIVE LAYER
5,6: CARBON COAT LAYER

## Claims

1. A current collecting foil (1) obtained by adhering a positive electrode foil (2) and a negative electrode foil (3) to each other via an adhesive layer (4) containing a conductive material, wherein
the adhesive layer (4) contains a resin foaming agent.

2. The current collecting foil (1) according to claim 1, wherein
the resin foaming agent contains at least one of a plurality of types of chemical foaming agents.

3. The current collecting foil (1) according to claim 1, wherein
the resin foaming agent contains at least one of a chemical foaming agent and a thermally expandable microcapsule.

4. The current collecting foil (1) according to any one of claims 1 to 3, wherein
the resin foaming agent is contained in the adhesive layer (4) at a ratio of 10 to 50%.

5. The current collecting foil (1) according to claim 4, wherein
the adhesive layer (4) contains an olefin-based resin, an epoxy-based resin, and a metal plated resin, and
the olefin-based resin is a resin having a melting point lower than foaming start temperature of the resin foaming agent.

6. A bipolar storage battery comprising: a current collecting foil (1) obtained by adhering a positive electrode foil (2) and a negative electrode foil (3) to each other via an adhesive layer (4) containing a conductive material, wherein
the adhesive layer (4) contains a resin foaming agent.

7. The bipolar storage battery according to claim 6, wherein
the resin foaming agent contains at least one of a plurality of types of chemical foaming agents.

8. The bipolar storage battery according to claim 6, wherein
the resin foaming agent contains at least one of a chemical foaming agent and a thermally expandable microcapsule.

9. The bipolar storage battery according to any one of claims 6 to 8, wherein
the resin foaming agent is contained in the adhesive layer (4) at a ratio of 10 to 50%.

10. The bipolar storage battery according to claim 9, wherein
the adhesive layer (4) contains an olefin-based resin, an epoxy-based resin, and a metal plated resin, and
the olefin-based resin is a resin having a melting point lower than foaming start temperature of the resin foaming agent.

11. The bipolar storage battery according to claim 10, wherein
the positive electrode foil (2) is an aluminum foil, and
the negative electrode foil (3) is a copper foil.

12. A material recovery method of a bipolar storage battery, comprising:
a disassembling step of disassembling the bipolar storage battery to separate a bipolar electrode from components;
a foaming step of heating the separated bipolar electrode to allow a resin foaming agent contained in an adhesive layer (4) of a current collecting foil (1) forming the bipolar electrode to foam to increase a thickness of the adhesive layer (4); and
a separation step of separating a positive electrode foil (2) and a negative electrode foil (3) adhered to each other via the adhesive layer (4) in the current collecting foil (1) in a state in which the resin foaming agent foams to increase the thickness of the adhesive layer (4).

13. The material recovery method of a bipolar storage battery according to claim 12, wherein
the adhesive layer (4) contains an olefin-based resin, an epoxy-based resin, and a metal plated resin,
the olefin-based resin is a resin having a melting point lower than foaming start temperature of the resin foaming agent, and
the foaming step includes a step of heating the bipolar electrode to temperature higher than the foaming start temperature of the resin foaming agent.
